# EUROPÄISCHE PATENTSCHRIFT

(11) **EP 2 626 469 B1**
(45) Veröffentlichungstag und Bekanntmachung des Hinweises auf die Patenterteilung: **31.08.2016**
(21) Anmeldenummer: 13152635.2
(22) Anmeldetag: 25.01.2013
(51) Int. Cl.: E01F 9/688, E01F 9/627

(54) **Fahrtrainingsvorrichtung**
Driver training device
Dispositif de formation à la conduite

(30) Priorität: 10.02.2012 AT 500302012
(43) Veröffentlichungstag der Anmeldung: 14.08.2013
(73) Patentinhaber: Michelitsch, Wolfgang, 9020 Klagenfurt (AT)
(72) Erfinder: Michelitsch, Wolfgang, 9020 Klagenfurt (AT); Ferlitz, Wolfgang, 76646 Bruchsal (DE)
(74) Vertreter: Wirnsberger, Gernot

(56) Entgegenhaltungen:
- FR-A1- 2 865 844
- GB-A- 1 395 395
- GB-A- 2 282 838

## Beschreibung

Die Erfindung betrifft ein Hindernis für eine Fahrtrainingsvorrichtung, umfassend eine zwischen einer Ruheposition und einer Arbeitsposition im Wesentlichen geradlinig verfahrbare Einheit, wobei die Einheit eine flexible Hülle sowie eine Rückstelleinrichtung zur Rückführung der Hülle in die Ruheposition umfasst.

Darüber hinaus betrifft die Erfindung ein Verfahren zum Ausfahren eines spontan erscheinenden und massiv wirkenden Objektes auf einer Fahrbahn mit einer Fahrtrainingsvorrichtung, die zumindest ein Hindernis mit einer Einheit umfasst.

Aus dem Stand der Technik sind verschiedene Fahrtrainingsvorrichtungen bekannt geworden, die Hindernisse aufweisen. So ist beispielsweise eine Vorrichtung bekannt, bei der Hindernisse durch plötzlich vor einem Fahrer auftauchende Wasserfontänen dargestellt werden. Diese Vorrichtungen weisen den Nachteil auf, dass die Wasserfontänen nur einen unzureichenden Eindruck eines Hindernisses vermitteln und der Fahrer nicht ausreichend auf massive Hindernisse im Straßenverkehr vorbereitet wird.

Weiter sind auch massive Hubkörper oder bewegliche Poller als Hindernisse bekannt geworden, die zu einer Absperrung von Straßen bevorzugt in Ballungsgebieten eingesetzt werden. Als Fahrtrainingseinrichtung sind derartige Vorrichtungen allerdings nicht geeignet, da Fahrzeuge bei Kontakt mit den Hubkörpern beschädigt werden würden. Darüber hinaus sind die Geschwindigkeiten, die bei einem Ausfahren derartiger Hubkörper erzielbar sind, zumeist nicht für einen derartigen Einsatzzweck geeignet.

Das Dokument FR 2 865 844 A1 offenbart ein ausrollbares Hindernis, welches eine flexible Hülle aufweist.

Aufgabe der Erfindung ist es, ein Hindernis der eingangs genannten Art anzugeben, mit welchem die Nachteile von Vorrichtungen des Standes der Technik vermieden oder zumindest verringert werden. Insbesondere sollen mit einem erfindungsgemäßen Hindernis die für Fahrtrainingsvorrichtungen erforderlichen Geschwindigkeiten erzielbar sein und eine Kollision mit einem Fahrzeug zu keinen Schäden am Fahrzeug führen.

Des Weiteren soll ein Verfahren der eingangs genannten Art angegeben werden, welches für Fahrtrainings geeignet ist und die Nachteile von Verfahren des Standes der Technik zumindest verringert.

Die erste Aufgabe wird erfindungsgemäß dadurch gelöst, dass bei einem Hindernis der eingangs genannten Art eine Führung vorgesehen ist, welche einen Gleitzylinder und ein Gleitteil umfasst, wobei die Hülle über das Gleitteil am Gleitzylinder verschiebbar gelagert ist.

Weil die Einheit eine flexible Hülle aufweist, entstehen bei Kollision des Fahrzeuges mit dem Hindernis am Fahrzeug keine Schäden. Weiter lässt sich das Hindernis mit der flexiblen Hülle wesentlich schneller als ein starres Hindernis bewegen. Darüber hinaus ist es mit der Rückstelleinrichtung möglich, das Hindernis rasch wieder in die Ruheposition zu bringen, sodass Kollisionen zumeist vermieden werden können. Beispielsweise können dadurch gegenüber Hindernissen, die lediglich über eine Gewichtskraft in die Ruheposition bewegt werden, wesentlich höhere Geschwindigkeiten bei einer Bewegung von der Arbeitsposition in die Ruheposition erzielt werden. Dadurch kann das Hindernis länger in der Arbeitsposition verbleiben und einen Eindruck vermitteln, der näher an der Realität ist, als bei Vorrichtungen des Standes der Technik.

Es kann bevorzugt vorgesehen sein, dass die Einheit pneumatisch betätigbar ist. Dadurch kann die flexible bzw. elastische Hülle beispielsweise in der Arbeitsposition zusätzlich aufgeblasen werden, wodurch der Eindruck eines massiven Körpers verstärkt wird. Auch kann dadurch ein Hindernis, welches im Wesentlichen aus einem elastischen Körper besteht, besonders einfach realisiert werden, sodass ein Risiko, Beschädigungen am Fahrzeug zu verursachen, weiter reduziert wird. Auch führt eine Kollision des Fahrzeuges mit dem Hindernis bei einer derartigen Ausbildung zu keinen großen Beschädigungen am Hindernis selbst. Selbstverständlich sind allerdings auch alternative Antriebsarten, wie die Bewegung mittels einer Zahnstange, eines Linearmotors oder eines Seiles, mit dem das Hindernis hochgezogen wird, ebenso möglich.

Erfindungsgemäß ist eine Führung vorgesehen, welche einen Gleitzylinder und ein Gleitteil umfasst. Dadurch kann die Einheit, die bevorzugt an der Führung in vertikaler Richtung bewegbar gelagert ist, entlang einer vordefinierten Bahn zwischen Ruheposition und Arbeitsposition bewegt werden. Der Gleitzylinder kann dabei als handelsübliches Rohr ausgebildet sein, um die Kosten zu minimieren. Wird der Gleitzylinder derart ausgebildet, verläuft die Bewegung von Ruheposition in Arbeitsposition vorzugsweise entlang einer Rohrachse, während in allen anderen Richtungen keine Relativbewegung möglich ist. Dabei ist der Gleitzylinder bevorzugt fest unterhalb der Fahrbahn verankert und die Einheit wird im Betrieb entlang des Gleitzylinders ausgefahren, sodass nur die flexible Hülle über die Fahrbahn ragt. Das Gleitteil ist dabei mit der Einheit verbunden und ermöglicht ein besonders gut geführtes Bewegen zwischen Ruheposition und Arbeitsposition. Eine Drehung des Gleitzylinders um seine Achse ist selbstverständlich möglich.

Es ist von Vorteil, dass die Führung an einem kopfseitigen Ende und an einem bodenseitigen Ende mit Anschlägen für die Einheit ausgebildet ist. Dadurch können die Ruheposition und die Arbeitsposition besonders einfach dadurch definiert werden, dass die Einheit, die mit dem Gleitteil verbunden ist, über das Gleitteil in der Arbeitsposition an einem oberen Anschlag und in der Ruheposition an einem unteren Anschlag anliegt. Darüber hinaus können dadurch auch hohe Beschleunigungskräfte aufgenommen werden, sodass hohe Geschwindigkeiten des Hindernisses realisierbar sind.

Erfindungsgemäß ist die Hülle über das Gleitteil am Gleitzylinder verschiebbar gelagert ist. Da die Einheit während der Bewegung zwischen Ruheposition und Arbeitsposition besser geführt ist und Flatterbewegungen im Wesentlichen vermieden werden, entsteht der Eindruck eines starren Körpers. Dadurch wird dem Fahrer ein verbesserter Eindruck eines massiven Körpers vermittelt.

Zweckmäßigerweise ist vorgesehen, dass die Rückstelleinrichtung mit dem Gleitzylinder und der Einheit verbunden ist. Da der Gleitzylinder im Betrieb bevorzugt relativ zur Fahrbahn fix angeordnet ist, lässt sich durch eine derartige Anordnung besonders einfach eine Rückstellkraft erzielen, die von einer Auslenkung der Einheit aus der Ruheposition abhängig ist. Dadurch kann ein rasches Einfahren des Hindernisses gewährleistet werden.

Die Rückstelleinrichtung ist bevorzugt als Feder ausgebildet. Zwar sind auch andere Rückstelleinrichtungen wie Linearmotoren oder magnetische Einrichtungen möglich; bei einer Feder ist jedoch eine Funktion auch bei Ausfall einer Energieversorgung gegeben. Die Feder kann zwischen den erwähnten Anschlägen gelagert sein.

Es kann auch bevorzugt vorgesehen sein, dass die Rückstelleinrichtung als pneumatischer Aktuator, insbesondere als pneumatischer Zylinder, ausgebildet ist. Derartige Aktuatoren haben den Vorteil einer geringen Wartungsintensität und können hohe Geschwindigkeiten erzielen. Besonders vorteilhaft ist ein pneumatischer Aktuator anzuwenden, wenn auch das Hindernis pneumatisch betätigt wird, da dann eine benötigte Druckluft sowohl zum Bewegen des Hindernisses von der Ruheposition in die Arbeitsposition als auch von der Arbeitsposition in die Ruheposition genutzt werden kann.

Es kann auch vorgesehen sein, dass die Hülle aus einem Gewebe, insbesondere einem Gewebeschlauch, besteht. Ein Gewebe ist einerseits robust und widerstandsfähig, sodass eine Kollision mit einem Fahrzeug zu keinen großen Beschädigungen am Fahrzeug oder der Hülle führt. Andererseits können so handelsübliche Schläuche besonders einfach als Teil des Hindernisses eingesetzt werden. Da derartige Schläuche auch in einer luftdichten Ausführung erhältlich sind, kann ein solcher Schlauch besonders vorteilhaft bei einem pneumatisch betätigten Hindernis eingesetzt werden.

Bevorzugt kann es auch sein, dass zumindest ein am Gleitzylinder oder Gleitteil befestigtes Dichtelement vorgesehen ist. Besonders bei einem Antrieb des Hindernisses, der auf Pneumatik oder Hydraulik basiert, kann dadurch eine zwischen Gleitzylinder und Gleitteil auftretende Leckage vermieden oder zumindest minimiert werden.

Vorteilhaft ist es, dass der Gleitzylinder feststehend angeordnet und hohl ausgebildet ist, wobei die Einheit mit der Hülle in einer Richtung beweglich am Gleitzylinder gelagert ist, sodass durch den hohlen Gleitzylinder Druckluft in die Hülle zuführbar ist. Dabei weist die Einheit bevorzugt einen Gewebeschlauch als Hülle auf, der an einer oberen Seite verschlossen ist und an einer unteren Seite mit dem Gleitring verbunden ist, der am Gleitzylinder geführt ist. Es kann auch vorgesehen sein, dass die Einheit nur aus der Rückstelleinrichtung und dem einseitig verschlossenem Gewebeschlauch, der mit dem Gleitteil und der Rückstelleinrichtung fix verbunden ist, gebildet wird. Die Einheit ist bevorzugt über einer Feder als Rückstelleinrichtung mit dem Gleitzylinder verbunden. Zum Ausfahren des Hindernisses wird Druckluft, bevorzugt bei 1 bis 2 bar Überdruck, durch ein Einlassventil und den hohlen Gleitzylinder geleitet, der bevorzugt als Metallrohr ausgebildet ist. Die Einheit mit der Hülle wird dadurch entlang des Gleitzylinders aus der Ruheposition in die Arbeitsposition bewegt, wo die Einheit am oberen Anschlag anliegt. Um die Einheit wieder in die Ruheposition zurückzubewegen, wird ein Auslassventil geöffnet, wodurch die Druckluft entweichen kann. Ein- und Auslassventile sind bevorzugt magnetbetätigt ausgeführt. Die Rückstellkraft der Feder bewirkt anschließend ein rasches Zurückbewegen der Einheit in die Ruheposition, wo diese am unteren Anschlag anliegt. Alternativ kann die Einheit auch als Faltenbalg ausgebildet sein, sodass keine Führungseinrichtung erforderlich ist und die Einheit ein Volumen, in welchem Druckluft speicherbar ist, bei einer Bewegung von der Ruheposition in die Arbeitsposition vergrößert.

Bevorzugt ist vorgesehen, dass eine Länge der Hülle eine Länge des Gleitzylinders um nicht mehr als 20 % übersteigt. Dadurch können zum einen Materialkosten gespart werden. Zum anderen kann so ein Hindernis mit geringem Bauraum realisiert werden.

Zum Vorbereiten von Fahrern auf abrupt auftauchende Hindernisse mit einer Fahrtrainingsvorrichtung mit einem Hindernis ist es vorteilhaft, das Hindernis erfindungsgemäß auszubilden. Dadurch kann das richtige Verhalten bei plötzlich auftretenden Hindernissen geübt werden, wobei auch eine Kollision mit dem Hindernis zu keinen Schäden am Fahrzeug führt. Besonders bevorzugt sind die Hindernisse dabei senkrecht in einem Boden unter der Fahrbahn positioniert und werden im Wesentlichen vertikal aus der Ruheposition in die Arbeitsposition bewegt. Befindet sich die Einheit des Hindernisses in der Ruheposition, ist dieses bevorzugt vollständig im Boden versenkt und schließt an einem oberen Ende mit der Fahrbahn ab, sodass in der Fahrbahn weder ein Hindernis noch eine Vertiefung erkennbar ist.

Sofern ein pneumatisch betätigtes Hindernis verwendet wird, hat es sich bewährt, dass die Fahrtrainingsvorrichtung mehrere Hindernisse und einen Druckluftspeicher aufweist, wobei im Druckluftspeicher eine Luftmenge speicherbar ist, mit der alle Hindernisse der Fahrtrainingseinrichtung gleichzeitig betätigbar sind. Dadurch ist eine besonders einfache Ausbildung der Fahrtrainingseinrichtung möglich. Bereits mit wenigen Bauteilen, insbesondere dem Druckluftspeicher, gegebenenfalls Kompressoren zum Bereitstellen der Druckluft, Ventilen, bevorzugt Magnetventilen, und den Hindernissen kann die Fahrtrainingsvorrichtung betriebsbereit sein. Sofern als Rückstelleinrichtungen ebenfalls pneumatische Aktuatoren eingesetzt werden, kann der Druckluftspeicher auch zu einem Ansteuern der Rückstelleinrichtung verwendet werden.

Zweckmäßigerweise ist vorgesehen, dass die Fahrtrainingsvorrichtung in einer oder mehreren Reihen angeordnete Hindernisse aufweist. Dadurch können realitätsnahe Situationen besonders einfach dargestellt werden.

Besonders bevorzugt ist vorgesehen, dass eine Steuereinheit und zumindest ein Magnetventil vorgesehen sind, mit denen das zumindest eine Hindernis betätigbar ist, wobei die Steuereinheit mit dem zumindest einen Magnetventil in Wirkverbindung steht.

Die zweite Aufgabe wird dadurch gelöst, dass bei einem Verfahren der eingangs genannten Art die Einheit eine über ein Gleitteil an einem Gleitzylinder verschiebbar gelagerte, flexible Hülle aufweist und zwischen einer Ruheposition und einer Arbeitsposition im Wesentlichen geradlinig verfahren wird, wobei bei einer Annäherung eines Trainingsfahrzeuges an die Fahrtrainingsvorrichtung die Einheit mit der flexiblen Hülle automatisch in die Arbeitsposition gebracht und bei Bedarf automatisch in die Ruheposition rückgestellt wird.

Mit einem derartigen Verfahren kann das richtige Verhalten bei schnell auftauchenden Hindernissen, die massiv scheinen, geübt werden. Durch die Rückstelleinrichtung wird eine Kollision auch dann vermieden, wenn der Fahrer nicht rechtzeitig reagiert und der Einheit nicht ausweicht. Sofern die Rückstelleinrichtung nicht rechtzeitig eingefahren werden kann oder versagt, besteht auch für Schäden am Fahrzeug kein Risiko, da die Einheit mit einer flexiblen Hülle ausgebildet ist, die aufgrund einer Nachgiebigkeit zu keinen größeren Schäden am Fahrzeug führt. Auch an der Hülle entstehen nur geringe oder gar keine Schäden.

Bevorzugt kann es auch sein, dass eine Annäherung eines Trainingsfahrzeuges durch eine Regelung mittels Sensoren überwacht wird und durch die Regelung, im Falle eines durch einen Fahrer nicht mehr vermeidbaren Zusammenstoßes, die Hindernisse, z. B. in weniger als einer Sekunde, in die Ruheposition verfahren werden. Dadurch können ein Fahrtraining vollautomatisch durchgeführt und Personalkosten gespart werden. Bevorzugt wird dabei auch eine Geschwindigkeit des Trainingsfahrzeuges gemessen, um einen Kollisionszeitpunkt abschätzen und das Hindernis rechtzeitig, aber nicht zu früh, in die Ruheposition bewegen zu können. Durch die kurze Zeit, in der das Hindernis eingefahren wird, können realitätsnahe Situationen besonders gut dargestellt werden.

Vorteilhaft ist es, dass zur Simulation eines eine Fahrbahn überquerenden Objektes mehrere Hindernisse einer Fahrtrainingsvorrichtung von der Regelung derart zeitlich versetzt aktiviert und deaktiviert werden, dass der Eindruck eines die Fahrbahn überquerenden Objektes erzeugt wird. Dadurch kann das richtige Verhalten bei die Fahrbahn querenden Personen gut geübt werden. Es werden dazu verschiedene, bevorzugt in einer Reihe positionierte, pneumatisch betätigbare Hindernisse mittels Magnetventilen aktiviert und kurz darauf in die Ruheposition zurückgefahren.

Vorteilhaft ist es, dass durch die Regelung unterschiedlich wählbare Schwierigkeitsstufen für ein Fahrtraining zur Verfügung gestellt werden. Dabei kann beispielsweise sowohl die Geschwindigkeit, in der die Hindernisse aus der Ruheposition in die Arbeitsposition bewegt werden, als auch die Anzahl der gleichzeitig erscheinenden Hindernisse variiert werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine schematische Darstellung eines erfindungsgemäßen Hindernisses;
Fig. 2 eine weitere schematische Darstellung eines erfindungsgemäßen Hindernisses;
Fig. 3 ein Detail eines erfindungsgemäßen Hindernisses in Seitenansicht;
Fig. 4 ein Detail eines erfindungsgemäßen Hindernisses in Vorderansicht;
Fig. 5 eine Fahrtrainingsvorrichtung in Seitenansicht;
Fig. 6 eine weitere Ansicht einer erfindungsgemäßen Fahrtrainingsvorrichtung.

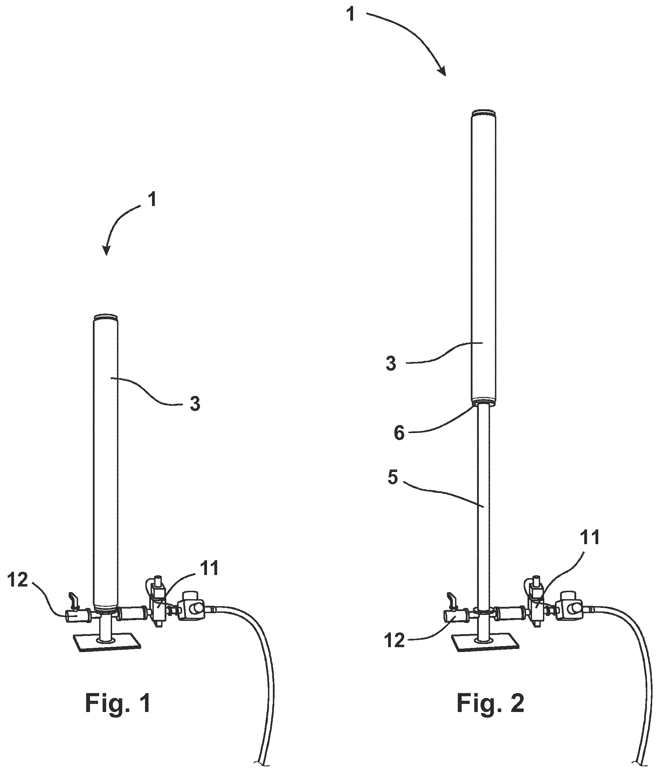

Fig. 1 zeigt ein erfindungsgemäßes Hindernis 1, wobei das im Ausführungsbeispiel dargestellte Hindernis 1 als pneumatisch aktivierbares Hindernis 1 ausgeführt ist. In Fig. 1 ist auch ein zum Aktivieren des Hindernisses 1 erforderlicher Pneumatikschlauch abgebildet. In Fig. 1 befindet sich eine bewegbare Einheit mit einer flexiblen Hülle 3, z. B. einen Gewebeschlauch, in einer Ruheposition, wobei die Einheit an einem unteren Anschlag 7 anliegt. Fig. 2 zeigt ein erfindungsgemäßes Hindernis 1, wobei die Einheit mit der Hülle 3 in einer Arbeitsposition, die vertikal über der Ruheposition liegt, dargestellt ist. Es ist weiter ein Gleitzylinder 5, der gemeinsam mit einem Gleitteil 6 eine Führung bildet, an welchem die Einheit von der Ruheposition in die Arbeitsposition bewegt wird, ersichtlich. Um die Einheit von der Ruheposition in der Arbeitsposition zu bewegen, wird aus einem Druckluftspeicher 10 Druckluft über den Pneumatikschlauch und ein Zuführventil 11, das bevorzugt als Magnetventil ausgebildet ist, in den hohlen Gleitzylinder 5 geleitet, wo diese an einem oberen Ende aus dem Gleitzylinder 5 austritt und in die Einheit eintritt. Ein Überdruck in der Einheit bzw. im Gewebeschlauch bei ausgefahrenem Hindernis 1 beträgt bevorzugt etwa 1 bis 2 bar. Die Einheit, die einen an einem oberen Ende geschlossenen Gewebeschlauch als flexible Hülle 3 aufweist, wird dabei durch eine Kraft, die aufgrund der im Gewebeschlauch anliegenden Druckluft wirkt, entlang des Gleitzylinders 5 von der Ruheposition in die Arbeitsposition bewegt. Diese Bewegung, die im Wesentlichen geradlinig und vertikal verläuft, bringt die Einheit in die Arbeitsposition, bis die Einheit an einem oberen Anschlag 8 anliegt. Da die flexible Hülle 3, die als Gewebeschlauch ausgebildet ist, mit dem Gleitteil 6 verbunden ist, welches im Wesentlichen luftdicht gegenüber dem Gleitzylinder 5 abschließt, kann vorgesehen sein, dass sich der Gewebeschlauch in der Arbeitsposition aufbläht, wodurch ein Eindruck eines besonders massiven Hindernisses 1 entsteht. Im Inneren des Gewebeschlauches wird eine als Feder ausgebildete Rückstelleinrichtung 4 bei Bewegen der Einheit von der Ruheposition in die Arbeitsposition komprimiert, sodass eine Rückstellkraft in Richtung der Ruheposition auf die Einheit und den Gewebeschlauch wirkt. Solange im Gewebeschlauch der Druck der Druckluft anliegt, bleibt die Feder komprimiert und die Einheit in der Arbeitsposition. Es ist weiter ein bevorzugt magnetisch betätigbares Ablassventil 12 vorgesehen, mit welchem ein Druck innerhalb des Gleitzylinders 5 und des Volumens, das vom in der Arbeitsposition befindlichen Gewebeschlauch gebildet wird, abgelassen werden kann. Wird dieses Ventil geöffnet, so fällt der Druck im Gewebeschlauch und im Gleitzylinder 5 ab und die Rückstellkraft, die durch die Feder auf die Einheit wirkt, führt zu einem raschen Rückbewegen der Einheit in die Ruheposition, wo diese wieder am unteren Anschlag 7 anliegt.

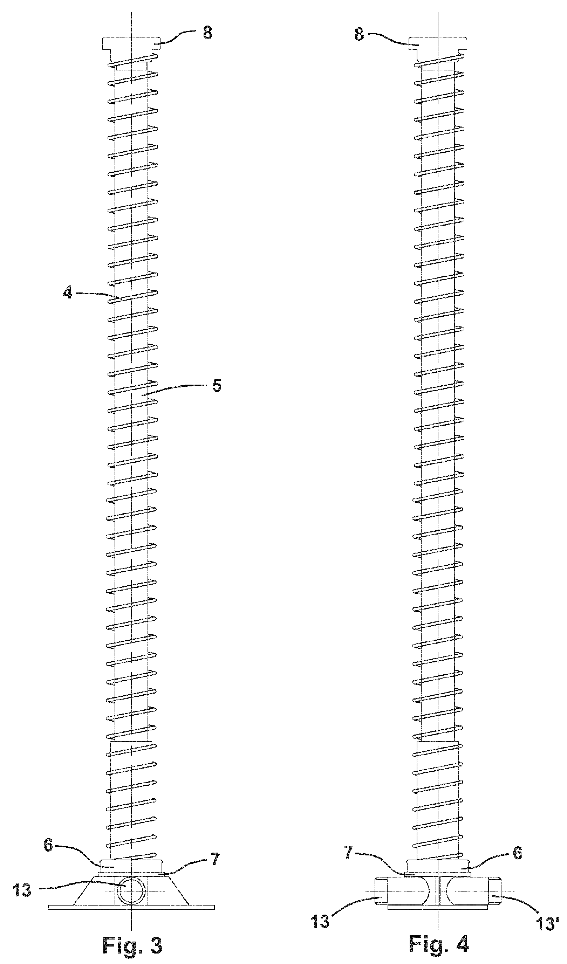

Fig. 3 zeigt das Hindernis 1 aus Fig. 1, wobei der an einem oberen Ende verschlossene und mit der Einheit verbundene Gewebeschlauch nicht dargestellt ist. Abgebildet ist der Gleitzylinder 5 mit der Rückstelleinrichtung 4, die als Feder ausgebildet ist, sowie das Gleitteil 6, das mit dem Gewebeschlauch, der im Ausführungsbeispiel die flexible Hülle 3 bildet, dichtend verbunden ist. Dazu wird bevorzugt ein Dichtelement 9 zwischen Gleitteil 6 und Gleitzylinder 5 angeordnet. Fig. 4 zeigt ebenfalls ein erfindungsgemäßes Hindernis 1 gemäß Fig. 3 in einer gegenüber Fig. 3 um 90° gedrehten Darstellung. In Fig. 4 sind auch die beiden Öffnungen 13, 13', in welche die Druckluft in den Gleitzylinder 5 ein- bzw. austreten kann, abgebildet. Eine Öffnung 13 wird über das Zuführventil 11 mit dem Druckluftspeicher 10 verbunden, während die zweite Öffnung 13' über das Ablassventil 12 mit einem Entspannungsraum oder der Umgebung verbunden wird, wohin die Luft entweichen kann, um das Hindernis 1 in die Ruheposition rückzubewegen.

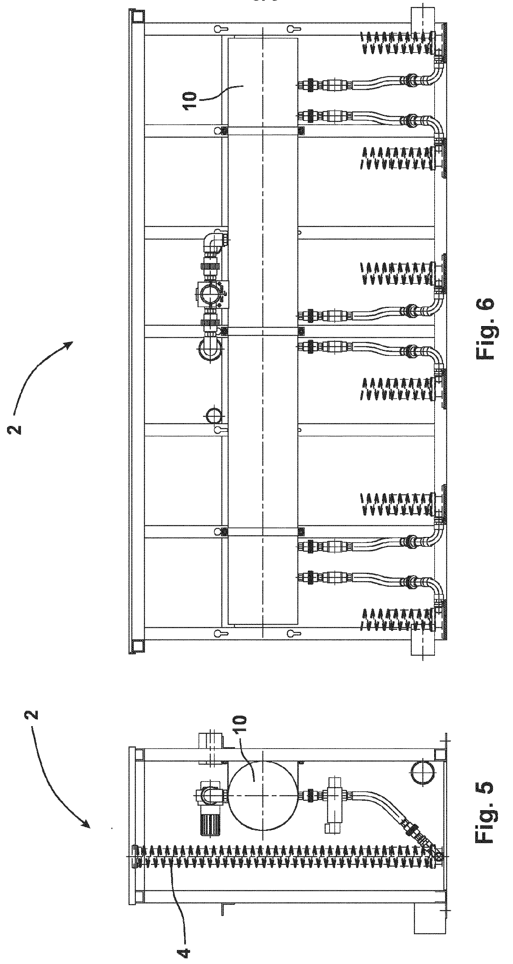

Fig. 5 zeigt eine unterhalb einer Fahrbahn angeordnete Fahrtrainingsvorrichtung 2 mit einem erfindungsgemäßen Hindernis 1, wobei auch ein Druckluftspeicher 10 schematisch dargestellt ist, in dem eine Luftmenge speicherbar ist, mit der sämtliche nur durch Federn angedeutete Hindernisse 1 mit der Fahrtrainingseinrichtung von der Ruheposition in die Arbeitsposition bewegbar sind. Fig. 6 zeigt die Fahrtrainingsvorrichtung 2 aus Fig. 5 in Seitenansicht. In dieser Darstellung ist ersichtlich, dass sechs Hindernisse 1 für die Fahrtrainingsvorrichtung 2 vorgesehen sind, die aus dem Druckluftspeicher 10 über Magnetventile angesteuert werden. Die Magnetventile werden von einer nicht dargestellten Regelung angesteuert, die unter anderem eine computerunterstützte Steuerung sowie Sensoren aufweist, mit denen ein Abstand eines Trainingsfahrzeuges zu den einzelnen Hindernissen 1 sowie eine Geschwindigkeit des Trainingsfahrzeuges gemessen werden kann, um die Hindernisse 1 je nach Abstand des Trainingsfahrzeuges und Geschwindigkeit desselben zu aktivieren bzw. zu deaktivieren. Unter Aktivieren ist dabei ein Bewegen der Einheit mit der Hülle 3 aus der Ruheposition in die Arbeitsposition sowie ein anschließendes Halten in dieser Position zu verstehen, während beim Deaktivieren eines Hindernisses 1 die Einheit mit der Hülle 3 von der Arbeitsposition in die Ruheposition bewegt wird.

Im Betrieb wird ein Fahrer, der an einem Fahrtechniktraining teilnimmt, angewiesen, mit einem Trainingsfahrzeug in Richtung der Hindernisse 1 zu fahren. Von der Sensorik wird dabei die Entfernung des Trainingsfahrzeuges von den Hindernissen 1 gemessen. Dies kann beispielsweise mit induktiven, optischen oder auch kapazitiven Sensoren durchgeführt werden. Sobald das Trainingsfahrzeug einen vordefinierten Abstand zur Fahrtrainingsvorrichtung 2 unterschreitet, wird zumindest ein Hindernis 1 aktiviert, indem das Zuführventil 11 zwischen dem Druckluftspeicher 10 und dem Hindernis 1 geöffnet wird, sodass am Hindernis 1 Druckluft anliegt und die Einheit des Hindernisses 1 mit dem Gewebeschlauch, welcher die Hülle 3 bildet, aus der Ruheposition in die Arbeitsposition bewegt wird. Je nach frei wählbarer Betriebsart können dabei mehrere oder auch nur ein einziges Hindernis 1 von der Ruheposition in die Arbeitsposition bewegt werden. Alternativ ist es auch möglich, sequenziell einzelne Hindernisse 1 zu aktivieren bzw. zu deaktivieren, um bewegte Hindernisse 1 darzustellen. Sofern der Fahrer nicht rechtzeitig reagiert und sich der Abstand zwischen Trainingsfahrzeug und Hindernis 1 unter einen vorgegebenen Wert verringert, wird ein zweites Magnetventil am Hindernis 1 geöffnet, sodass die Druckluft aus dem Hindernis 1 entweichen kann und die Einheit von der Rückstelleinrichtung 4 aus der Arbeitsposition in die Ruheposition rasch zurückbewegt wird. Dies kann in weniger als einer Sekunde durchgeführt werden, sodass eine Kollision des Trainingsfahrzeuges mit dem Hindernis 1 vermieden werden kann. Der Abstand, ab welchem das Hindernis 1 wieder in die Ruheposition bewegt wird, kann dabei auch von der Geschwindigkeit des Trainingsfahrzeuges abhängig sein, sodass bei hohen Geschwindigkeiten bereits ab einem Unterschreiten eines größeren Abstandes das Hindernis 1 wieder in die Ruheposition bewegt wird. Gleichzeitig wird das Magnetventil, welches den Druckluftspeicher 10 mit dem Hindernis 1 verbindet, geschlossen, sodass die Druckluft des Druckluftspeichers 10 nicht in die Umgebung entweicht. Über eine Programmierung der Regelung sind dabei verschiedenste Geschwindigkeiten der ausund einfahrbaren Hindernisse 1 realisierbar, wodurch ein Schwierigkeitsgrad des Fahrtrainings beliebig geändert werden kann. Über die flexible Hülle 3 des Hindernisses 1 wird ein Schaden am Fahrzeug auch dann vermieden, wenn es zu einem Fehler kommt und die Hindernisse 1 vor einer Kollision deaktiviert werden können.

## Patentansprüche

1. Hindernis (1) für eine Fahrtrainingsvorrichtung (2), umfassend eine zwischen einer Ruheposition und einer Arbeitsposition im Wesentlichen geradlinig verfahrbare Einheit, wobei die Einheit eine flexible Hülle (3) sowie eine Rückstelleinrichtung (4) zur Rückführung der Hülle (3) in die Ruheposition umfasst, **dadurch gekennzeichnet, dass** eine Führung vorgesehen ist, welche einen Gleitzylinder (5) und ein Gleitteil (6) umfasst, wobei die Hülle (3) über das Gleitteil (6) am Gleitzylinder (5) verschiebbar gelagert ist.

2. Hindernis (1) nach Anspruch 1, **dadurch gekennzeichnet, dass** die Einheit pneumatisch betätigbar ist.

3. Hindernis (1) nach Anspruch 2, **dadurch gekennzeichnet, dass** die Führung an einem kopfseitigen Ende und an einem bodenseitigen Ende mit Anschlägen für die Einheit ausgebildet ist.

4. Hindernis (1) nach Anspruch 2 oder 3, **dadurch gekennzeichnet, dass** die Rückstelleinrichtung (4) mit dem Gleitzylinder (5) und der Einheit verbunden ist.

5. Hindernis (1) nach einem der Ansprüche 1 bis 4, **dadurch gekennzeichnet, dass** die Rückstelleinrichtung (4) als Feder ausgebildet ist.

6. Hindernis (1) nach einem der Ansprüche 1 bis 4, **dadurch gekennzeichnet, dass** die Rückstelleinrichtung (4) als pneumatischer Aktuator, insbesondere als pneumatischer Zylinder, ausgebildet ist.

7. Hindernis (1) nach einem der Ansprüche 1 bis 6, **dadurch gekennzeichnet, dass** die Hülle (3) aus einem Gewebe, insbesondere einem Gewebeschlauch, besteht.

8. Hindernis (1) nach einem der Ansprüche 1 bis 7, **dadurch gekennzeichnet, dass** zumindest ein am Gleitzylinder (5) oder Gleitteil (6) befestigtes Dichtelement (9) vorgesehen ist.

9. Hindernis (1) nach einem der Ansprüche 1 bis 8, **dadurch gekennzeichnet, dass** der Gleitzylinder (5) feststehend angeordnet und hohl ausgebildet ist, wobei die Einheit mit der Hülle (3) in einer Richtung beweglich am Gleitzylinder (5) gelagert ist, sodass durch den hohlen Gleitzylinder (5) Druckluft in die Hülle (3) zuführbar ist.

10. Hindernis (1) nach einem der Ansprüche 1 bis 9, **dadurch gekennzeichnet, dass** eine Länge der Hülle (3) eine Länge des Gleitzylinders (5) um nicht mehr als 20 % übersteigt.

11. Fahrtrainingsvorrichtung (2) mit einem Hindernis (1), **dadurch gekennzeichnet, dass** das Hindernis (1) nach einem der Ansprüche 1 bis 10 ausgebildet ist.

12. Fahrtrainingsvorrichtung (2) nach Anspruch 11, **dadurch gekennzeichnet, dass** eine Steuereinheit und zumindest ein Magnetventil vorgesehen sind, mit denen das zumindest eine Hindernis (1) betätigbar ist, wobei die Steuereinheit mit dem zumindest einen Magnetventil in Wirkverbindung steht.

13. Verfahren zum Ausfahren eines spontan erscheinenden und massiv wirkenden Objektes auf einer Fahrbahn mit einer Fahrtrainingsvorrichtung (2), die zumindest ein Hindernis (1) mit einer Einheit umfasst, welche eine über ein Gleitteil (6) an einem Gleitzylinder (5) verschiebbar gelagerte, flexible Hülle (3) aufweist und zwischen einer Ruheposition und einer Arbeitsposition im Wesentlichen geradlinig verfahren wird, wobei bei einer Annäherung eines Trainingsfahrzeuges an die Fahrtrainingsvorrichtung (2) die Einheit mit der flexiblen Hülle (3) automatisch in die Arbeitsposition gebracht und bei Bedarf automatisch in die Ruheposition rückgestellt wird.

14. Verfahren nach Anspruch 13, **dadurch gekennzeichnet, dass** eine Annäherung eines Trainingsfahrzeuges durch eine Regelung mittels Sensoren überwacht wird und durch die Regelung, im Falle eines durch einen Fahrer nicht mehr vermeidbaren Zusammenstoßes, die Hindernisse (1) in die Ruheposition verfahren werden.

## Claims

1. An obstacle for a driver training apparatus (2), comprising a unit that can be moved between a resting position and a working position in essentially a straight line, wherein the unit comprises a flexible sheath (3) as well as a resetting device (4) for returning the sheath (3) to the resting position, **characterized in that** a guide comprising a sliding cylinder (5) and a sliding part (6) is provided, wherein the sheath (3) is supported, so that it is displaceable over the sliding part (6) on the sliding cylinder (5).

2. The obstacle (1) according to claim 1, **characterized in that** the unit can be operated pneumatically.

3. The obstacle (1) according to claim 2, **characterized in that** the guide is designed with stops for the unit on a head end and on a bottom end.

4. The obstacle (1) according to claim 2 or 3, **characterized in that** the resetting device (4) is connected to the sliding cylinder (5) and to the unit.

5. The obstacle (1) according to any one of claims 1 to 4, **characterized in that** the resetting device (4) is designed as a spring.

6. The obstacle (1) according to any one of claims 1 to 4, **characterized in that** the resetting device (4) is designed as a pneumatic actuator, in particular as a pneumatic cylinder.

7. The obstacle (1) according to any one of claims 1 to 6, **characterized in that** the sheath (3) consists of a woven fabric, in particular a fabric tubing.

8. The obstacle (1) according to any one of claims 1 to 7, **characterized in that** at least one sealing element (9), which is fastened onto the sliding cylinder (5) or the sliding part (6), is provided.

9. The obstacle (1) according to any one of claims 1 to 8, **characterized in that** the sliding cylinder (5) is arranged in a stationary position and is designed to be hollow, wherein the unit is mounted so that it is movable together with the sheath (3) in one direction on the sliding cylinder (5), so that compressed air can be supplied into the sheath (3) through the hollow cylinder (5).

10. The obstacle (1) according to any one of claims 1 to 9, **characterized in that** the length of the sheath (3) exceeds the length of the sliding cylinder (5) by no more than 20%.

11. A driver training apparatus (2) having an obstacle (1), **characterized in that** the obstacle (1) is designed according to any one of claims 1 to 10.

12. The driver training apparatus (2) according to claim 11, **characterized in that** a control unit and at least one solenoid with which the at least one obstacle (1) can be actuated are provided, wherein the control unit is in operative connection to the at least one solenoid valve.

13. A method for delivering an object that appears spontaneously and acts like a solid on a road surface with a driver training apparatus (2), comprising at least one obstacle (1) with a unit, which has a flexible sheath (3) that is mounted displaceably by means of a sliding part (6) on a sliding cylinder (5) and is moved between a resting position and a working position essentially in a straight line, wherein the unit together with the flexible sheath (3) is automatically brought into the working position on the approach of a training vehicle to the driver training apparatus (2) and is automatically restored to the resting position as needed.

14. The method according to claim 13, **characterized in that** the approach of a training vehicle is monitored by the control by means of sensors, and the obstacles (1) are moved into the resting position by the control in the event of a collision that could not have been prevented by a driver.

## Revendications

1. Obstacle (1) pour un dispositif de formation à la conduite (2), comprenant une unité déplaçable pour l'essentiel en ligne droite entre une position de repos et une position de travail, l'unité comprenant une enveloppe (3) flexible ainsi qu'un dispositif de rappel (4) pour remettre l'enveloppe (3) dans la position de repos, **caractérisé en ce qu'**un guidage est prévu, lequel comprend un cylindre coulissant (5) et une pièce coulissante (6), l'enveloppe (3) étant logée pouvant se déplacer par la pièce coulissante (6) sur le cylindre coulissant (5).

2. Obstacle (1) selon la revendication 1, **caractérisé en ce que** l'unité peut être actionnée de manière pneumatique.

3. Obstacle (1) selon la revendication 2, **caractérisé en ce que** le guidage est constitué avec des butées pour l'unité sur une extrémité côté tête et une extrémité côté sol.

4. Obstacle (1) selon la revendication 2 ou 3, **caractérisé en ce que** le dispositif de rappel (4) est relié au cylindre coulissant (5) et à l'unité.

5. Obstacle (1) selon l'une quelconque des revendications 1 à 4, **caractérisé en ce que** le dispositif de rappel (4) est constitué comme un ressort.

6. Obstacle (1) selon l'une quelconque des revendications 1 à 4, **caractérisé en ce que** le dispositif de rappel (4) est constitué comme un actionneur pneumatique, en particulier comme un vérin pneumatique.

7. Obstacle (1) selon l'une quelconque des revendications 1 à 6, **caractérisé en ce que** l'enveloppe (3) est composée d'un tissu, en particulier d'un tuyau en tissu.

8. Obstacle (1) selon l'une quelconque des revendications 1 à 7, **caractérisé en ce qu'**au moins un élément d'étanchéité (9) est prévu, fixé sur le cylindre coulissant (5) ou la pièce coulissante (6).

9. Obstacle (1) selon l'une quelconque des revendications 1 à 8, **caractérisé en ce que** le cylindre coulissant (5) est disposé de manière fixe et est constitué creux, l'unité étant logée avec l'enveloppe (3) mobile dans une direction sur le cylindre coulissant (5) de manière que de l'air comprimé peut être amené dans l'enveloppe (3) à travers le cylindre coulissant creux (5).

10. Obstacle (1) selon l'une quelconque des revendications 1 à 9, **caractérisé en ce qu'**une longueur de l'enveloppe (3) dépasse une longueur du cylindre coulissant (5) de pas plus de 20%.

11. Dispositif de formation à la conduite (2) avec un obstacle (1), **caractérisé en ce que** l'obstacle (1) est constitué selon l'une quelconque des revendications 1 à 10.

12. Dispositif de formation à la conduite (2) selon la revendication 11, **caractérisé en ce qu'**une unité de commande et au moins une électrovanne sont prévues avec lesquelles au moins un obstacle (1) peut être actionné, l'unité de commande étant en liaison fonctionnelle avec au moins une électrovanne.

13. Procédé pour déployer un objet apparaissant spontanément et agissant massivement sur une chaussée avec un dispositif de formation à la conduite (2), qui comprend au moins un obstacle (1) avec une unité, laquelle comporte une enveloppe (3) flexible, logée déplaçable par une pièce coulissante (6) sur un cylindre coulissant (5) et est déplacée pour l'essentiel en ligne droite entre une position de repos et une position de travail, l'unité avec l'enveloppe flexible (3) étant mise automatiquement dans la position de travail à l'approche d'un véhicule de formation près du dispositif de formation à la conduite (2) et étant remise automatiquement dans la position de repos en cas de besoin.

14. Procédé selon la revendication 13, **caractérisé en ce qu'**une approche d'un véhicule de formation est surveillée par un réglage au moyen de capteurs et par le réglage, les obstacles (1) sont déplacés dans la position de repos en cas d'une collision qui ne peut plus être évitée par le conducteur.
